# EUROPEAN PATENT APPLICATION

(11) **EP 2 664 851 A2**
(43) Date of publication of application: **20.11.2013**
(21) Application number: 13167109.1
(22) Date of filing: 08.05.2013
(51) Int. Cl.: F23R 3/28, F23R 3/14

(54) **Fuel nozzle cap**

(30) Priority: 18.05.2012 US 201213475882
(71) Applicant: General Electric Company, Schenectady, New York 12345 (US)
(72) Inventor: Berry, Jonathan Dwight, Greenville, SC 29615 (US)
(74) Representative: Cleary, Fidelma

(57) **Abstract**

Certain embodiments include a first individual sector 100 having a first outer perimeter configured to fit together with outer perimeters of a plurality of individual sectors to form a combustor cap assembly 52 of a turbine combustor 14, wherein the first individual sector 100 comprises a first inner perimeter configured to fit about a nozzle outer perimeter of a first fuel nozzle 68, and the first individual sector 100 is configured to fixedly attach to the first fuel nozzle 68.

## Description

The subject matter disclosed herein relates to gas turbine engines, and, more particularly, to a fuel nozzle in a turbine combustor.

A gas turbine engine combusts a fuel-air mixture in a combustor, and then drives one or more turbines with the resulting hot combustion gases. In general, fuel and air are mixed and ignited within one or more fuel nozzles of the combustor. Conventional combustion assemblies may include a single cap having a face exposed to a combustion chamber of the combustor. The single cap includes large circular openings to support multiple circular-shaped fuel nozzles. Unfortunately, existing cap design may be susceptible to various weaknesses. For example, combustion dynamics (e.g., flow disturbances, pressure waves, etc.) and high thermal gradients across the single cap can cause cracking and undesirable oscillations within the head end of the combustor.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a turbine combustor having a plurality of fuel nozzles and a combustor cap assembly having a plurality of individual sectors supporting the plurality of fuel nozzles, wherein each sector of the plurality of individual sectors is fixedly attached to a respective fuel nozzle of the plurality of fuel nozzles.

In a second embodiment, a system a first fuel nozzle and a first individual sector having a first outer perimeter configured to fit together with outer perimeters a plurality of individual sectors to form a combustor cap assembly of a turbine combustor, wherein the first individual sector comprises a first inner perimeter that fits about a nozzle outer perimeter of the first fuel nozzle, and the first individual sector is fixedly attached to the first fuel nozzle.

In a third embodiment, a system includes a first individual sector having a first outer perimeter configured to fit together with outer perimeters of a plurality of individual sectors to form a combustor cap assembly of a turbine combustor, wherein the first individual sector comprises a first inner perimeter configured to fit about a nozzle outer perimeter of a first fuel nozzle, and the first individual sector is configured to fixedly attach to the first fuel nozzle.

Various features, aspects, and advantages of the present invention will become better understood when the following detailed description is read with reference to the accompanying drawings in which like characters represent like parts throughout the drawings, wherein:
FIG. 1 is a schematic of an embodiment of a gas turbine system with a plurality of turbine combustors;
FIG. 2 is a cross-sectional side view schematic of an embodiment of one of the turbine combustors of FIG. 1;
FIG. 3 is a perspective view of an embodiment of a turbine combustor fuel nozzle assembly having fuel nozzles with individual sector cap assemblies;
FIG. 4 is a perspective view of an embodiment of a peripheral fuel nozzle having an individual sector cap assembly;
FIG. 5 is a cross-sectional axial view of an embodiment of a peripheral fuel nozzle having an individual sector cap assembly, illustrating a mounting arrangement of the individual sector cap assembly to the fuel nozzle;
FIG. 6 is a schematic, taken within line 6-6 of FIG. 2, of an embodiment of a turbine combustor, illustrating a peripheral fuel nozzle having an individual sector cap assembly;
FIG. 7 is a schematic, taken within line 6-6 of FIG. 2 of an embodiment of a turbine combustor, illustrating a peripheral fuel nozzle having an individual sector cap assembly;
FIG. 8 is a schematic, taken within line 6-6 of FIG. 2, of an embodiment of a turbine combustor, illustrating a peripheral fuel nozzle having an individual sector cap assembly;
FIG. 9 is a schematic, taken within line 9-9 of FIG. 6, of an embodiment of a peripheral fuel nozzle having an individual sector cap assembly; and
FIG. 10 is a schematic, taken within line 9-9 of FIG. 6, of an embodiment of a peripheral fuel nozzle having an individual sector cap assembly.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The disclosed embodiments are directed toward a combustor cap assembly for a turbine combustor. More specifically, the disclosed embodiments may include a plurality of individual sector assemblies mounted to respective fuel nozzles of a fuel nozzle assembly. For example, in certain embodiments, the fuel nozzle assembly may have a plurality of peripheral fuel nozzles arranged about a central fuel nozzle. The plurality of peripheral fuel nozzles may each include an individual sector assembly mounted to the respective peripheral fuel nozzle. Further, the individual sector assemblies may have a geometry that enables the individual sector assemblies to abut one another (e.g., adjacent individual sector assemblies), the central fuel nozzle, and a turbine combustor liner surrounding the fuel nozzle assembly. In certain embodiments, the individual sector assemblies may include seals, such as hula seals, to improve the interface (e.g., seal while enabling some movement) between the individual sector assemblies and surrounding components (e.g., adjacent individual sector assemblies, the central fuel nozzle, and the liner of the turbine combustor). In this manner, the individual sector assemblies may form the substantially continuous combustor cap assembly between the fuel nozzle assembly and a combustion chamber of the turbine combustor.

Additionally, as discussed in detail below, the seals may be configured to provide damping, account for tolerances within the head end of the turbine combustor, and/or reduce air leakage across the combustor cap assembly. Furthermore, the individual sector assemblies may be configured to receive an air flow, such as a high pressure cooling air flow. In this manner, the combustor cap assembly of turbine combustor may achieve improved cooling and reduce undesired effects of combustion dynamics. Additionally, in certain embodiments, the individual sector assemblies may be substantially enclosed, thereby increasing the pressure of the air flow received by each individual sector assembly and further improving the cooling of the combustor cap assembly.

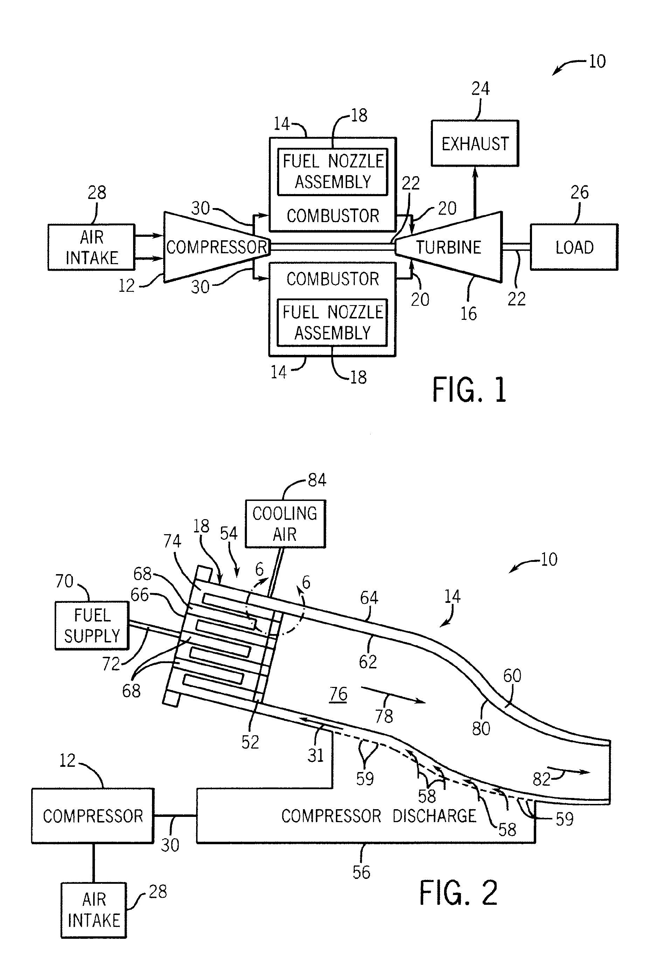

Turning now to the drawings, FIG. 1 illustrates a block diagram of an embodiment of a gas turbine system 10. The system 10 includes a compressor 12, turbine combustors 14, and a turbine 16. The turbine combustors 14 each include a fuel nozzle assembly 18. The fuel nozzle assembly 18 of each turbine combustor 14 includes fuel nozzles which route a liquid fuel and/or gas fuel, such as natural gas or syngas, into the turbine combustors 14. As described in detail below, each turbine combustor 14 may include a combustor cap assembly with individual sector assemblies. More specifically, the individual sector assemblies may be mounted to a respective fuel nozzle of the fuel nozzle assembly 18, and the individual sector assemblies may collectively form the combustor cap assembly. Furthermore, the individual sector assemblies may be configured to receive an air flow to cool the combustor cap assembly.

The turbine combustors 14 ignite and combust an air-fuel mixture, and then pass hot pressurized combustion gasses 20 (e.g., exhaust) into the turbine 16. Turbine blades are coupled to a shaft 22, which is also coupled to several other components throughout the turbine system 10. As the combustion gases 20 pass through the turbine blades in the turbine 16, the turbine 16 is driven into rotation, which causes the shaft 22 to rotate. Eventually, the combustion gases 20 exit the turbine system 10 via an exhaust outlet 24. Further, the shaft 22 may be coupled to a load 26, which is powered via rotation of the shaft 22. For example, the load 26 may be any suitable device that may generate power via the rotational output of the turbine system 10, such as an electrical generator, a propeller of an airplane, and so forth.

Compressor blades are included as components of the compressor 12. The blades within the compressor 12 are coupled to the shaft 22, and will rotate as the shaft 22 is driven to rotate by the turbine 16, as described above. The rotation of the blades within the compressor 12 compress air from an air intake 28 into pressurized air 30. The pressurized air 30 is then fed into the fuel nozzle assembly 18 (e.g., fuel nozzles) of the turbine combustors 14. The fuel nozzles of the fuel nozzle assemblies 18 mix the pressurized air 30 and fuel to produce a suitable mixture ratio for combustion (e.g., a combustion that causes the fuel to more completely burn) so as not to waste fuel or cause excess emissions. As discussed below, in certain embodiments, the pressurized air 30 may also flow to the individual sector assemblies of the combustor cap assembly of each combustor 14 to cool the combustor cap assembly.

FIG. 2 is a schematic of an embodiment of one of the turbine combustors 14 of FIG. 1, illustrating the fuel nozzle assembly 18 having a combustor cap assembly 52 within a head end 54 of the turbine combustor 14. As described above, the compressor 12 receives air from the air intake 28, compresses the air, and produces a flow of pressurized air 30 for use in the combustion process within the turbine combustor 14. As shown in the illustrated embodiment, the pressurized air 30 is received by a compressor discharge 56 that is operatively coupled to the turbine combustor 14. As indicated by arrows 58, the pressurized air 30 flows from the compressor discharge 56 towards the head end 54 of the turbine combustor 14. More specifically, the pressurized air 30 flows through an annulus 60 between a liner 62 and a flow sleeve 64 of the turbine combustor 14 to reach the head end 54. The pressurized air 30 may reach the head end 54 at a reduced pressure air 31 (e.g., air 31 has a lower pressure than the pressurized air 30). As will be appreciated, the pressure of the pressurized air 30 is reduced as it cools (e.g., via impingement) the combustor 14 via impingement holes 59.

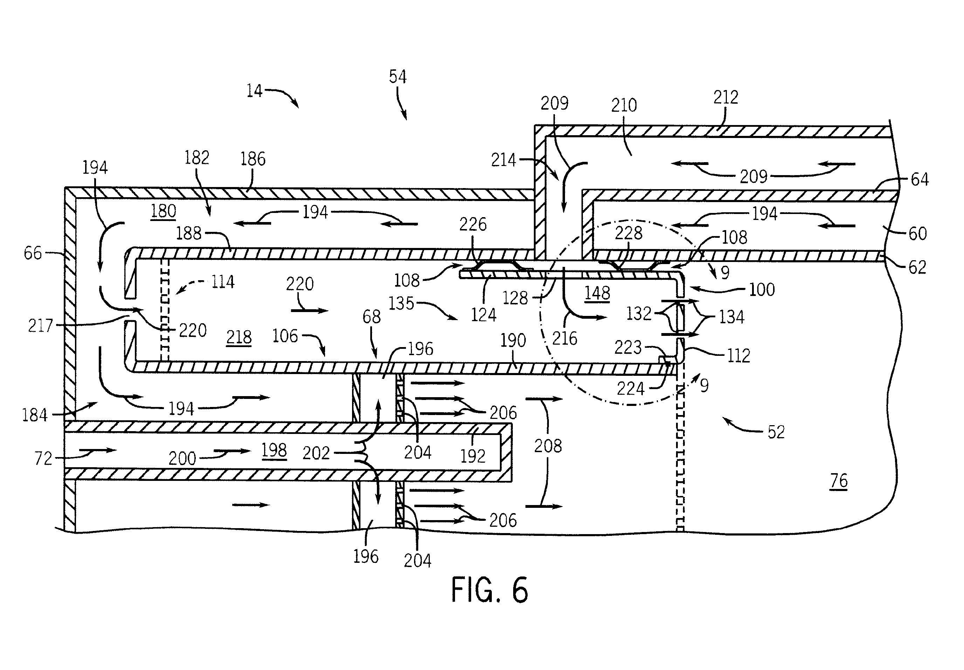

In certain embodiments, the head end 54 includes an end plate 66 that may support the fuel nozzle assembly 18 depicted in FIG. 1. In the illustrated embodiment, the fuel nozzle assembly 18 has multiple fuel nozzles 68, which may include individual sector assemblies of the combustor cap assembly 52. A fuel supply 70 provides fuel 72 to the fuel nozzles 68. Additionally, an air flow path 74 (e.g., air flow path 180 shown in FIG. 6) delivers the pressurized air 30 from the annulus 60 of the turbine combustor 14 to the fuel nozzles 68. The fuel nozzles 68 combine the pressurized air 30 with the fuel 72 provided by the fuel supply 70 to form an air/fuel mixture. For example, the fuel 72 may be injected into the air flow path 74 by swirl vanes. The air/fuel mixture flows from the air flow path 74 through the combustor cap assembly 52 and into a combustion chamber 76 where the air/fuel mixture is ignited and combusted to form combustion gases (e.g., exhaust). As shown, the combustor cap assembly 52 creates a boundary between the combustion chamber 76 and the fuel nozzles 68. The combustion gases flow in a direction 78 toward a transition piece 80 of the turbine combustor 14. The combustion gases pass through the transition piece 80, as indicated by arrow 82, toward the turbine 16, where the combustion gases drive the rotation of the blades within the turbine 16.

During the combustion process, the combustor cap assembly 52 may experience stress as combustion occurs. In particular, the pressurized air 30 may be at a temperature, around 300-700°C, which causes thermal expansion of combustor cap assembly 52. Fuel may be at around 10 to 175°C, thereby causing a thermal expansion of fuel nozzles 68 that is of a lesser magnitude, relative to the thermal expansion of the combustor cap assembly 52. The fuel nozzles 68 and the combustor cap assembly 52 may be composed of similar or different materials, such as stainless steel, an alloy, or other suitable material. Furthermore, combustion may expose the combustor cap assembly 52 to temperatures ranging from approximately 1000° to 1700° or more Celsius. As a result of exposure to these various temperatures, the combustor cap assembly 52 may experience considerable thermal stresses. As discussed in detail below, segmentation of the combustor cap assembly 52 may provide stress relief that may be caused, for example, by thermal expansion of the different components of the combustor cap assembly 52. More particularly, the combustor cap assembly 52 may include multiple individual sector assemblies attached or fixed to the fuel nozzles 68 that are configured to receive a cooling air flow 84, which may be a higher pressure than the pressurized air 31. As a result, the combustor cap assembly 52 may not include piston rings and/or floating collars. In other embodiments, the cooling air flow 84 may be the pressurized air 31 from the annulus 60 or an air flow from another source. Additionally, the multiple individual sector assemblies may abut one another and the liner 62 of the turbine combustor 14 with hula seals, thereby improving sealing and vibration damping between adjacent fuel nozzles 68 in the fuel nozzle assembly 18 and reducing undesired leakage of pressurized air 30 across the combustor cap assembly 52. The hula seals between the individual sector assemblies may also allow for misalignment and improved tolerances between the fuel nozzles 68.

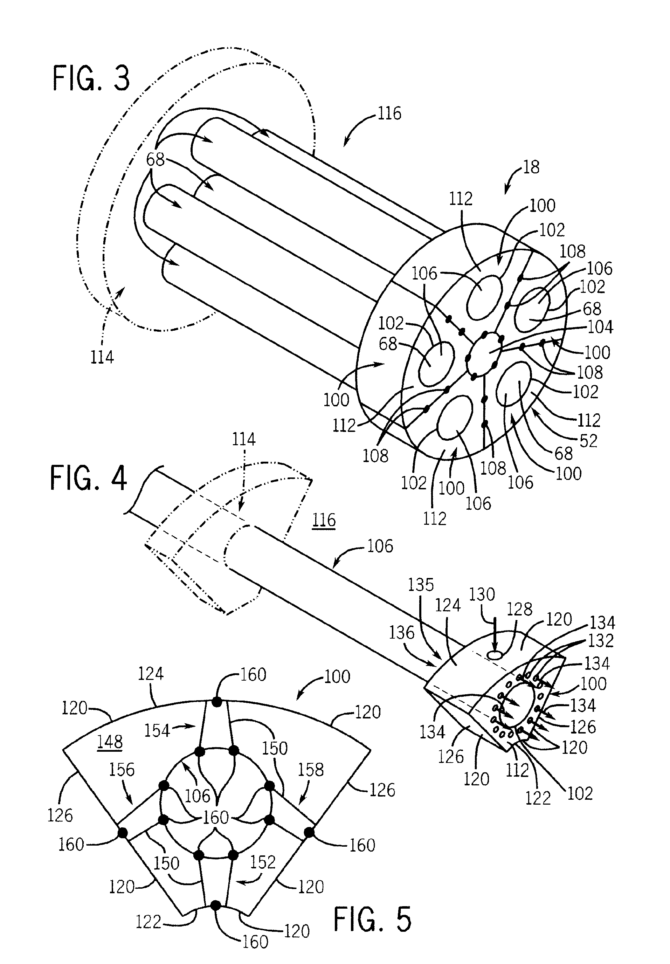

FIG. 3 is a perspective view of the fuel nozzle assembly 18 and the combustor cap assembly 52, where the combustor cap assembly 52 includes individual sector assemblies 100. As mentioned above, the combustor cap assembly 52 is disposed on ends 102 of the fuel nozzles 68, thereby separating the fuel nozzles 68 from the combustion chamber 76 of the turbine combustor 14. In the illustrated embodiment, the fuel nozzle assembly 18 includes six fuel nozzles 68. More specifically, the fuel nozzle assembly 18 includes a central fuel nozzle 104 and five peripheral fuel nozzles 106 disposed about the central fuel nozzle 104. However, other embodiments of the fuel nozzle assembly 18 may includes other numbers of fuel nozzles 68 (e.g., 4, 5, 7, 8, or more), with peripheral fuel nozzles 106 surrounding the central fuel nozzle 104.

As shown, each of the peripheral fuel nozzles 106 of the fuel nozzle assembly 18 includes a respective individual sector assembly 100 disposed about the respective end 102 of each of the peripheral fuel nozzles 106. Additionally, each of the individual sector assemblies 100 has a similar "pie-shaped" or "wedge-shaped" configuration. In this manner, the individual sector assemblies 100 may collectively form the combustor cap assembly 52. More specifically, each individual sector assembly 100 disposed about each peripheral fuel nozzle 106 abuts the individual sector assemblies 100 of the peripheral fuel nozzles 106 to which it is adjacent. Additionally, each individual sector assembly 100 abuts the central fuel nozzle 104. As mentioned above, each individual sector assembly 100 also abuts the liner 62 of the turbine combustor 14. In this manner, the entire perimeter of each individual sector assembly 100 abuts another surface. Furthermore, the interfaces between each of the individual sector assemblies 100 may include hula seals 108. That is, the individual sector assemblies 100 may include hula seals 108 to improve the interfaces and contacts between one another. Similarly, the individual sector assemblies 100 may include hula seals 108 to improve the interfaces and contacts with the central fuel nozzle 104. The hula seals 108 may also provide improved damping and alignment among the fuel nozzles 68 in the fuel nozzle assembly 18. The hula seals 108 may also allow some movement, thermal expansion, contraction, etc., among the fuel nozzles 68. Additionally, while the illustrated embodiments show hula seals 108, other embodiments of the combustor cap assembly 52 may include other types of seals, such as leaf seals, brush seals, metal cloth seals, spring seals, and so forth.

As discussed in further detail below, each individual sector assembly 100 is configured to receive the cooling air flow 84. For example, the cooling air flow 84 may be the pressurized air 31 from the air flow path 74 or cooling air from another source, which may be a different (e.g., higher) pressure than the pressurized air 31. For example, the cooling air flow 84 may be the pressurized air 30 from the compressor discharge 56. As each individual sector assembly 100 receives the cooling air flow 84, the cooling air flow 84 passes through respective front plates 112 of the individual sector assemblies 100. In this manner, the cooling air flow 84 may cool the individual sector assemblies 100 and the combustor cap assembly 52. By cooling the individual sector assemblies 100 and the combustor cap assembly 52, the thermal gradient between the combustion chamber 76 and the head end 54 of the turbine combustor 14 may be reduced, which may reduce low cycle fatigue and wear on the fuel nozzle assembly 18 and the fuel nozzles 68. Additionally, certain embodiments of the fuel nozzle assembly 18 may include a dynamics plate 114. The dynamics plate 114 is disposed about the fuel nozzle assembly 18 upstream of the combustor cap assembly 52. As will be appreciated, the dynamics plate 114 may be adjusted along the fuel nozzle assembly 18 to regulate a volume 116 between dynamics plate 114, the combustor cap assembly 52, and the liner 62 surrounding the dynamics plate 114, the combustor cap assembly 52 and the fuel nozzle assembly 18. As the volume 116 is increased or decreased, the frequencies of combustion dynamics damped or attenuated in the head end 54 of the turbine combustor 14 may be adjusted.

FIG. 4 is a perspective view of an embodiment of the individual sector assembly 100 mounted to, and disposed about, the end 102 of one of the peripheral fuel nozzles 106. In certain embodiments, the individual sector assembly 100 may be mounted to the peripheral fuel nozzle 106 by welding joints or other fixed joints. As a result, the individual sector assembly 100 is fixed to the peripheral fuel nozzle 106. Additionally, when the individual sector assembly 100 and the peripheral fuel nozzle 106 are installed within the turbine combustor 14, the individual sector assembly 100 may not move relative to the peripheral fuel nozzle 106.

As mentioned above, the individual sector assembly 100 has the front plate 112, which is exposed to the combustion chamber 76 of the turbine combustor 14. Additionally, the individual sector assembly 100 has sides 120, which form an outer perimeter of the individual sector assembly 100. For example, the individual sector assembly 100 includes an inner radial side or surface 122 (e.g., arcuate surface), an outer radial side or surface 124 (e.g., arcuate surface) and lateral sides or surfaces 126 (e.g., converging or diverging surfaces). When the fuel nozzle assembly 18 (e.g., the central fuel nozzle 104 and the peripheral fuel nozzles 106) and the combustor cap assembly 52 (e.g., the individual sector assemblies 100) are assembled, the respective inner radial surface 122 of each individual sector assembly 100 abuts the central fuel nozzle 104. Additionally, the lateral surfaces 126 abut respective lateral surfaces 126 of adjacent individual sector assemblies 100, and the outer radial surface 124 abuts the liner 62 of the turbine combustor 14. As mentioned above, the sides 120 (e.g., the inner radial surface 122, the outer radial surface 124, and the lateral surfaces 126) may each include one or more hula seals 108. The hula seals 108 serve to improve the interface between the sides 120 and the respective surfaces, which abut the sides 120. In particular, the hula seals 108 provide an improved seal while enabling some movement, such as thermal expansion or contraction. Additionally, the hula seals 108 may provide improved alignment among the fuel nozzles 68 in the fuel nozzle assembly 18, while also helping to damp vibration associated with combustion dynamics or other sources.

As mentioned above, the individual sector assembly 100 is configured to receive the cooling air flow 84, which may be the pressurized air 31 from the air flow path, the pressurized air 30 from the compressor discharge 56, or other high pressure air flow (e.g., higher pressure than the pressurized air 30). More specifically, the outer radial surface 124 of the individual sector assembly 100 may include one or more apertures 128 configured to receive the cooling air flow 84, in the manner described below. In one embodiment, the cooling air flow 84 flows into a cavity (e.g., cavity 148 shown in FIG. 5) of the individual sector assembly 100 formed by the sides 120, the front plate 112, and the peripheral fuel nozzle 106, as indicated by arrow 130. Thereafter, the cooling air flow 84 passes through apertures 132 formed in the front plate 112, as indicated by arrows 134. In this manner, the cooling air flow 84 may cool the individual sector assemblies 100 and the combustor cap assembly 52. Additionally, the cooling air flow 84 may flow through the air flow path 74 and into the volume 116, from where the cooling air flow 84 may enter the cavity of the individual sector assembly 100 from a back side 135 (e.g., a side opposite the front plate 112) of the individual sector assembly 100. By cooling the individual sector assemblies 100 and the combustor cap assembly 52, the thermal gradient between the combustion chamber 76 and the head end 54 of the turbine combustor 14 may be reduced, which may reduce thermal stress and wear on the fuel nozzle assembly 18 and the fuel nozzles 68. Furthermore, in certain embodiments, the individual sector assembly 100 may include a back plate 136 (e.g., opposite the front plate 112). The addition of the back plate 136 may substantially enclose the cavity of the individual sector assembly 100. In this manner, the pressure of the cooling air flow 84 passing through the apertures 132 of the front plate 112 may increase, thereby increasing the pressure drop across the front plate 112. As will be appreciated, elevated pressure of the cooling air flow 84 passing through the apertures 132 of the front plate 112 may help reduce the effects of combustion dynamics produced within the combustion chamber 76 of the turbine combustor 14. Additionally, the elevated pressure of the cooling air flow 84 within the individual sector assembly 100 may increase the flow rate of the cooling air flow 84 through the apertures 132 of the front plate 112, thereby increasing the cooling and reducing thermal stress of the individual sector assemblies 100 and the combustor cap assembly 52.

FIG. 5 is a cross-sectional axial view of an embodiment of the peripheral fuel nozzle 106 with the individual sector assembly 100, illustrating a mounting arrangement of the individual sector assembly 100 to the peripheral fuel nozzle 106. Additionally, the illustrated embodiment show a cavity 148 formed by the individual sector assembly 100 and the peripheral fuel nozzle 106 into which the cooling air flow 84 may flow (e.g., from the air flow path 74). The individual sector assembly 100 is mounted to the peripheral fuel nozzle 106 by several brackets 150. In the illustrated embodiment, the brackets 150 have an A-shaped configuration. However, other embodiments may include brackets 150 having other configurations.

As shown, a first bracket 152 couples the inner radial surface 122 of the individual sector assembly 100 to the peripheral fuel nozzle 106. Similarly, a second bracket 154 couples the outer radial surface 124 of the individual sector assembly 100 to the peripheral fuel nozzle 106, a third bracket 156 couples one of the lateral surfaces 126 of the individual sector assembly 100 to the peripheral fuel nozzle 106, and a fourth bracket 158 couples another lateral surface 126 of the individual sector assembly 100 to the peripheral fuel nozzle 106. As mentioned above, the individual sector assembly 100 is fixedly attached to the peripheral fuel nozzle 106. For example, each of the brackets 150 may be secured to the peripheral fuel nozzle 106 and the respective side 120 of the individual sector assembly 100 by weld joints 160. In other embodiments, the brackets 150 may be secured to the peripheral fuel nozzle 106 by other methods such as brazed joints, bolts, rivets, and so forth. Because the individual sector assembly 100 is fixedly attached to the peripheral fuel nozzle 106, the combustor cap assembly 52 may not include piston rings and/or floating collars. In other words, the individual sector assembly 100 does not move or float relative to its supported fuel nozzle 106.

FIG. 6 is a schematic of an embodiment of the individual sector assembly 100 mounted to the peripheral fuel nozzle 106 and installed within the head end 54 of the turbine combustor 14. Specifically, the illustrated embodiment shows the front plate 112 of the individual sector assembly 100 coupled to the peripheral fuel nozzle 106 and the outer radial surface 124 interfacing with the liner 62 of the turbine combustor 14. As mentioned above, the cooling air flow 84 (e.g., pressurized air 30, pressurized air 31, or other air flow) flows into the cavity 148 of the individual sector assembly 100 and subsequently passes through the apertures 132 of the front plate 112, thereby cooling the individual sector assembly 100, the combustor cap assembly 52, and the peripheral fuel nozzle 106. As described below, the cooling air flow 84 may flow into the cavity 148 of the individual sector assembly 100 through various paths (e.g., through air flow path 180, gap 217, and volume 218, through the air inlet 214, and so forth).

As mentioned above, in operation, the peripheral fuel nozzle 106 (e.g., fuel nozzle 68) combines the pressurized air 31 from the annulus 60 with the fuel 72 provided by the fuel supply 70 to form an air/fuel mixture for combustion within the combustion chamber 76 of the turbine combustor 14. For example, the peripheral fuel nozzle 106 may received the pressurized air 31 from an air flow path 180 operatively coupled to the annulus 60 between the liner 62 and the flow sleeve 64 of the turbine combustor 14. As shown, the air flow path 180 contains a first portion 182 and a second portion 184, and the first portion 182 and the second portion 184 are operatively coupled. The first portion 182 of the air flow path 180 is defined by an outer wall 186 (e.g, a head end casing) and an inner wall 188 (e.g., a head end sleeve) of the turbine combustor 14. The second portion 184 of the air flow path 180 is defined by an outer shell 190 (e.g., a burner tube of the fuel nozzle 68, 106) and an inner shell 192 (e.g., a central fuel supply conduit) of the peripheral fuel nozzle 106. As indicated by arrows 194, the pressurized air 31 flows from the annulus 60, first through the first portion 182 of the air flow path 180 in an upstream direction, and then through the second portion 184 of the air flow path 180 in a downstream direction. Subsequently, the pressurized air 31 flows around swirl vanes 196 of the peripheral fuel nozzle 106. As mentioned above, the fuel 72 is released into the pressurized air 31 through the swirl vanes 196. Specifically, the fuel 72 flows down a fuel path 198 within the inner shell 192 (e.g., central fuel supply conduit) of the peripheral fuel nozzle 106, as represented by arrows 200. The fuel 72 passes into the swirl vanes 196 from the fuel path 198, as represented by arrows 202, and exits the swirl vanes 196 through fuel ports 204 in the swirl vanes 196, as represented by arrows 206. The fuel 72 mixes with the pressurized air 31 to create an air/fuel mixture. The air/fuel mixture flows downstream, as indicated by arrows 208, toward the combustion chamber 76.

As mentioned above, the individual sector assembly 106 of the combustor cap assembly 52 is coupled to the peripheral fuel nozzle 106 of the fuel nozzle assembly 18. As shown, the individual sector assembly 100 may receive the cooling air flow 84, represented by arrows 209, from a cooling air flow path 210. For example, in the illustrated embodiment, the cooling air flow path 210 is formed by the flow sleeve 64 of the turbine combustor 14 and a casing 212 of the turbine combustor 14. As mentioned above, the cooling air flow 84 may be the pressurized air 30 supplied by the compressor discharge 54. In other embodiments, the cooling air flow 84 may be supplied by another source. Furthermore, the cooling air flow 84 may have a higher pressure than the pressurized air 31 flowing through the liner 62 and the flow sleeve 64 (e.g., represented by arrows 194).

The cooling air flow 84, represented by arrows 209, enters the cavity 148 of the individual sector assembly 100 through the aperture 128 in the outer radial surface 124 and from a cooling air inlet 214 operatively coupled to the cooling air flow path 210. While the illustrated embodiment shows a single cooling air inlet 214, other embodiments may include more cooling air inlets 214. For example, the individual sector assembly 100 may have 2, 3, 4, 5, 6, 7, 8, or more cooling air inlets 214. Similarly, other individual sector assemblies 100 of the combustor cap assembly 52 may include a single or multiple cooling air inlets 214 configured to flow the cooling air flow 84 into the respective cavity 148 of each individual sector assembly 100. The cavity 148 receives the cooling air flow 84, represented by arrows 209, from the cooling air inlet 214 and directs the cooling air flow 84 in an upstream direction towards the front plate 112 of the individual sector assembly 100, as indicated by arrow 216. Moreover, the cooling air 84 is directed toward the apertures 132 in the front plate 112. In the illustrated embodiment, the apertures 132 are straight holes. However, as discussed below, other embodiments of the front plate 112 may have apertures 132 that are angled holes. As the cooling air flow 84 passes through the apertures 132, the air flow 84 helps to cool the front plate 112, the individual sector assembly 100 and the combustor cap assembly 52.

In the illustrated embodiment, the cavity 148 of the individual sector assembly 100 may also receive the pressurized air 31 flowing through the air flow path 180, as mentioned above. Specifically, the pressurized air 31 may flow through the gap 217 between the outer shell 190 (e.g., burner tube) of the peripheral fuel nozzle 106 and the inner wall 188 (e.g., a head end sleeve) and into the volume 218, as represented by arrows 220. From the volume 218, the pressurized air 30, represented by arrow 220, may pass into the cavity 148 of the individual sector assembly 100. As mentioned above, the head end 54 of the turbine combustor 14 may include the dynamics plate 114. As shown, the dynamics plate 114 is disposed between the outer shell 190 (e.g., burner tube) of the peripheral fuel nozzle 106 and the inner wall 188 (e.g., a head end sleeve), and may be moved to adjust the size of the volume 218. As the size of the volume 218 is adjusted, the frequencies of vibrations and pressure fluctuations damped within the head end 54 of the turbine combustor 14 may be changed.

As mentioned above, the individual sector assembly 100 is rigidly attached to the peripheral fuel nozzle 106. Specifically, an inner perimeter 223 of the individual sector assembly 100 is fixedly attached to the outer shell 190 (e.g., burner tube) of the peripheral fuel nozzle 106. In the illustrated embodiment, the inner perimeter 223 is secured to the outer shell 190 by a weld joint 224. As will be appreciated, multiple weld joints 224 may be used to secure the inner perimeter 223 to the outer shell 190. In other embodiments, the inner perimeter 223 may be fixedly attached to the outer shell 190 of the peripheral fuel nozzle 106 by other methods, such as the brackets 150, brazing, bolting, riveting, etc.

Additionally, hula seals 108 are disposed between the individual sector assembly 100 and the liner 62 and the outer wall 188 of the turbine combustor 14. The hula seals 108 serve multiple functions. For example, the hula seals 108 may substantially block the pressurized air 31 and/or the cooling air flow 84 from leaking between the individual sector assembly 100, the liner 62, and the outer wall 186 and into the combustion chamber 76. Additionally, the hula seals 108 may allow for less stringent tolerances and misalignment of the fuel nozzle assembly 18 and the combustor cap assembly 52 within the head end 54 of the turbine combustor 14. In other words, the hula seals 108 may enable some movement, such as thermal expansion and/or contraction, of the fuel nozzles 68. Furthermore, the hula seals 108 may enable improved damping of vibration associated with combustion dynamics among the fuel nozzles 68 and within the head end 54 of the turbine combustor. Indeed, the spring rate of the hula seals 108 may be selected to adjust damping among the fuel nozzles 68 and within the head end 54 of the turbine combustor 14. Furthermore, the hula seals 108 may simplify the installation of the fuel nozzle assembly 18 and the combustor cap assembly 52.

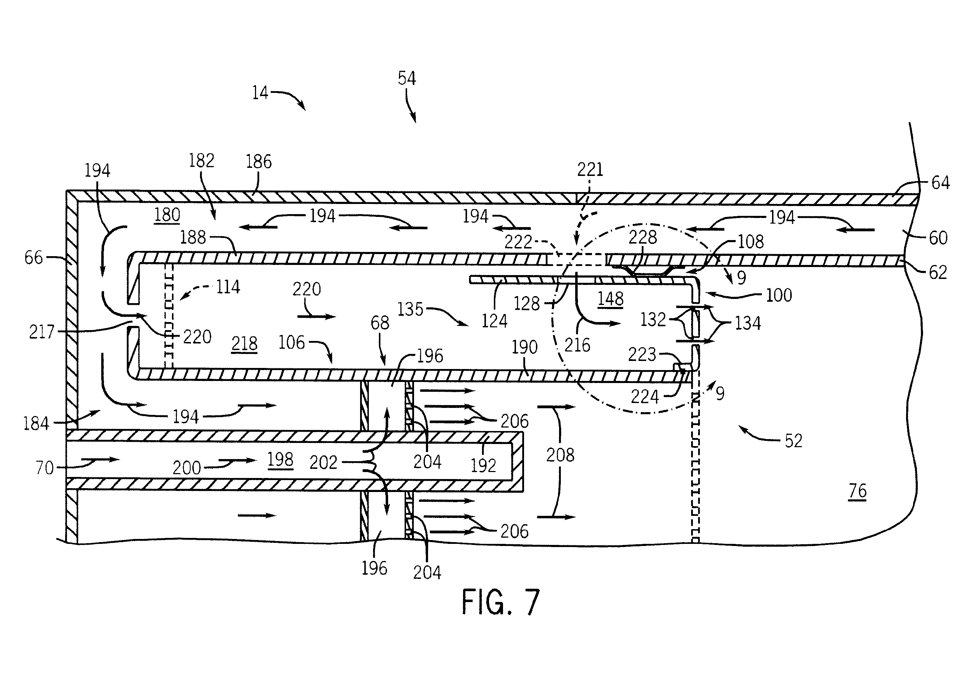

In the illustrated embodiment, the outer radial surface 124 of the individual sector assembly 100 includes a first hula seal 108, 226. As shown, the first hula seal 226 is configured to interface with the inner wall 188 (e.g., head end sleeve) of the turbine combustor 14. Similarly, the liner 62 of the turbine combustor 14 includes a second hula seal 108, 228 (e.g., an inverted hula seal) configured to interface with the outer radial surface 124 of the individual sector assembly 100. However, in other embodiments, the inner wall 188 of the turbine combustor 14 may include the hula seal 108, 226 (e.g., an inverted hula seal) configured to interface with the outer radial surface 124 of the individual sector assembly 100. Similarly, in certain embodiments, the outer radial surface 124 of the individual sector assembly 100 may include the hula seal 108, 228 configured to interface with the liner 62 of the turbine combustor 14. FIG. 7 is a schematic of an embodiment of the individual sector assembly 100 mounted to the peripheral fuel nozzle 106 and installed within the head end 54 of the turbine combustor 14. The illustrated embodiment includes similar elements and element numbers as the embodiment shown in FIG. 6. However, in the illustrated embodiment, the cavity 148 of the individual sector assembly 100 receives the pressurized air 31, represented by arrows 194, as the cooling air flow 84. In other words, the individual sector assembly 100 does not receive the cooling air flow 84 from the cooling air inlet 214 (e.g., where the cooling air flow 84 is the pressurized air 30 or other air flow). For example, the pressurized air 31 may reach the cavity 148 of the individual sector assembly 100 by flowing from the annulus 60, through the air flow path 180, through the gap 217, through the volume 218, and into the cavity 148 through the back side 135 of the individual sector assembly 100, as discussed in detail above.

Additionally, or alternatively, the pressurized air 31 may flow into the cavity 148 through the aperture 128 of the outer radial surface 124 of the individual sector assembly 100. That is, the pressurized air 31 may flow into the cavity 148 through the aperture 128 of the outer radial surface 124 instead of, or in addition to, the pressurized air 31 passing through the air flow path 180, the gap 217, and the volume 218 to reach the back side 135 of the individual sector assembly 100. As shown, the pressurized air 31 may pass through an aperture 222 in the liner 62, as indicated by arrow 221. In some embodiments, the aperture 222 may be formed in the inner wall 188 (e.g., head end sleeve) of the turbine combustor 14. However, other embodiments of the turbine combustor 14 may not include the aperture 222. Furthermore, the illustrated embodiment of the individual sector assembly 100 includes one hula seal 108. Specifically, the individual sector assembly 100 includes the second hula seal 228, but not the first hula seal 226 shown in FIG. 6.

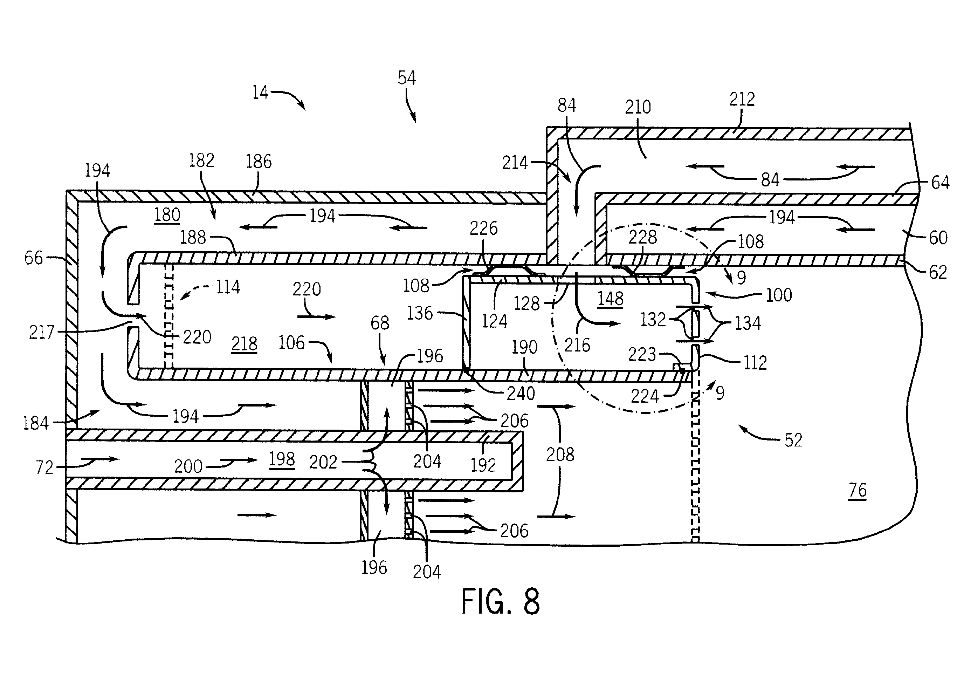

FIG. 8 is a schematic of an embodiment of the individual sector assembly 100 mounted to the peripheral fuel nozzle 106 and installed within the head end 54 of the turbine combustor 14. The illustrated embodiment includes similar elements and element numbers as the embodiment shown in FIG. 6. Additionally, the illustrated embodiment of the individual sector assembly 100 includes the back plate 136, which may be secured to the outer shell 190 (e.g., burner tube) of the peripheral fuel nozzle 106 by a weld joint 240. In this manner, the cavity 148 of the individual sector assembly 100 is substantially enclosed and/or sealed relative to the fuel nozzle 68, 106. That is, the cavity 148 is substantially enclosed by the front plate 112, the back plate 136, the lateral sides 126, the outer radial surface 124, the inner radial surface 122, and the outer shell 190 (e.g., burner tube) of the peripheral fuel nozzle 106. As a result, the elevated pressure of the cooling air flow 84 may be maintained or increased within the individual sector assembly 100. As mentioned above, the cooling air flow 84 may have a pressure higher than the pressurized air 30 flowing through the annulus 60 and the air flow path 180. As a result, the substantially enclosed individual sector assembly 100 may block the pressurized air 30 (e.g., flowing within the volume 218, as described above) from mixing with the higher pressure cooling air flow 84 within the cavity 148. In this manner, the cooling air flow 84 may maintain an elevated pressure within the individual sector assembly 100, thereby providing improved cooling of the combustor cap assembly 52 and the fuel nozzle assembly 18 and increasing the pressure drop across the front plate 112 of the individual sector assembly 100.

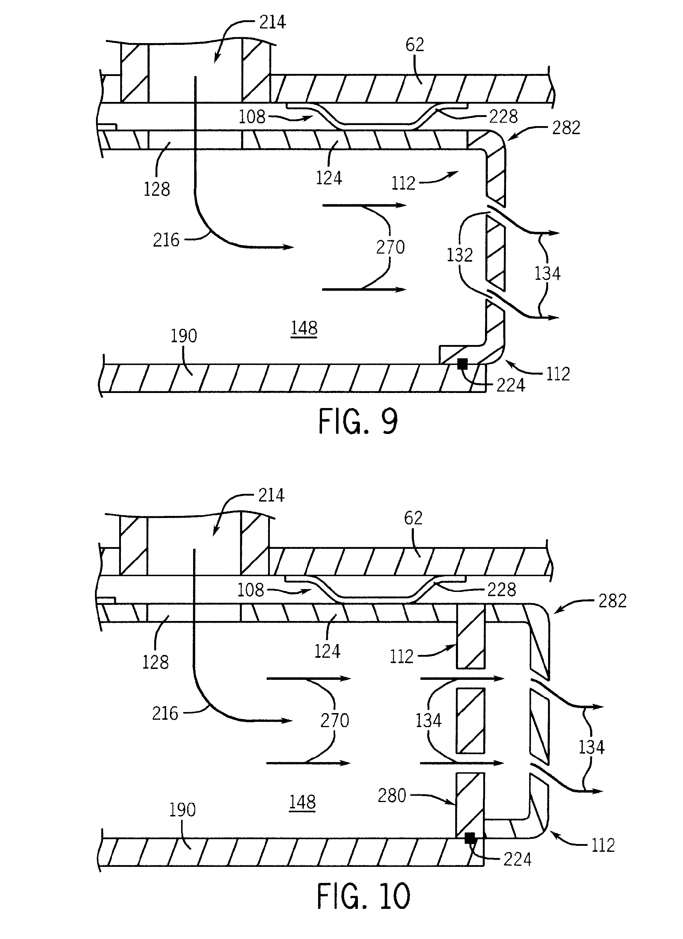

FIGS. 9 and 10 are schematics of embodiments of the front plate 112 of the individual sector assembly 100 mounted to the peripheral fuel nozzle 106. For example, FIG. 9 illustrates the front plate 112 of the individual sector assembly 100, where the apertures 132 in the front plate 112 are angled holes. In certain embodiments, the front plate 112 having apertures 132, which are angled holes, may act as an effusion plate. FIG. 10 illustrates an embodiment of the individual sector assembly 100 having two front plates 112 (e.g., a first front plate 280 and a second front plate 282). As shown, each of the two front plates 112 has the apertures 132 configured to flow the cooling air flow 84, represented by arrows 270, from the cavity 148 to the combustion chamber 76, as indicated by arrows 134. For example, the first front plate 280 may be an impingement plate and the second front plate 282 may be an effusion plate. That is, the first front plate 280 may impinge the cooling air flow 84, represented by arrows 270, on the second front plate 282.

As described in detail above, the disclosed embodiments are directed towards the combustor cap assembly 52 for the turbine combustor 14. More specifically, the disclosed embodiments include a plurality of individual sector assemblies 100 mounted to fuel nozzles 68 of the fuel nozzle assembly 18. For example, in certain embodiments, the fuel nozzle assembly 18 includes peripheral fuel nozzles 106 arranged about the central fuel nozzle 104. The peripheral fuel nozzles 106 may each include the individual sector assembly 100 mounted to the respective peripheral fuel nozzle 106. Further, the individual sector assemblies 100 may have a geometry that enables an entire outer perimeter of the individual sector assemblies 100 to abut one another (e.g., adjacent individual sector assemblies 100), the central fuel nozzle 106, and the liner 62 surrounding the fuel nozzle assembly 18. In certain embodiments, the individual sector assemblies 100 further include hula seals 108 to improve the interface between the individual sector assemblies 100 and surrounding components (e.g., adjacent individual sector assemblies 100, the central fuel nozzle 106, and the liner 62 of the turbine combustor 14). In this manner, the individual sector assemblies 100 may form the substantially continuous combustor cap assembly 52 between the fuel nozzle assembly 18 and the combustion chamber 76 of the turbine combustor 14. Additionally, the hula seals 108 may be configured to provide damping, account for tolerances within the head end 54 of the turbine combustor 14, allow movement, e.g., thermal expansion or contraction, of the fuel nozzles 68, and/or reduce air leakage across the combustor cap assembly 52. Furthermore, the individual sector assemblies 100 are configured to receive a cooling air flow 84, which may be a high pressure cooling air flow. For example, the cooling air flow 84 may be pressurized air 31 from an annulus 60 between a liner 62 and flow sleeve 64 of the combustor 14, or pressurized air 30 from a compressor discharge case 56. In this manner, the combustor cap assembly 52 of turbine combustor 14 may achieve improved cooling and reduce undesired effects of combustion dynamics. Additionally, in certain embodiments, the individual sector assemblies 100 may be substantially enclosed, thereby increasing the pressure of the cooling air flow 84 received by each individual sector assembly 100 and further improving the cooling of the combustor cap assembly 52.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   a turbine combustor, comprising:
      a plurality of fuel nozzles; and
      a combustor cap assembly comprising a plurality of individual sectors supporting the plurality of fuel nozzles, wherein each sector of the plurality of individual sectors is fixedly attached to a respective fuel nozzle of the plurality of fuel nozzles.
2. The system of clause 1, wherein each sector of the plurality of individual sectors comprises a wedge-shaped outer perimeter.
3. The system of any preceding clause, wherein each sector of the plurality of individual sectors comprises a circular inner perimeter that extends around a circular outer perimeter of the respective fuel nozzle of the plurality of fuel nozzles.
4. The system of any preceding clause, wherein each fuel nozzle of the plurality of fuel nozzles comprises an air conduit having at least one swirl vane, and each fuel nozzle comprises at least one fuel outlet configured to output a fuel flow into an air flow passing through the air conduit.
5. The system of any preceding clause, wherein each sector of the plurality of individual sectors comprises at least one hula seal disposed between each pair of abutting sectors of the plurality of individual sectors, or at least one hula seal disposed between each sector and a liner surrounding the combustor cap assembly, or at least one hula seal disposed between each sector and a central fuel nozzle.
6. The system of any preceding clause, wherein the at least one hula seal is configured to maintain a seal while damping vibration and/or allowing movement due to thermal expansion or contraction of the plurality of individual sectors.
7. The system of any preceding clause, wherein the plurality of fuel nozzles comprises a plurality of peripheral fuel nozzles disposed about a central fuel nozzle, and each peripheral fuel nozzle is fixedly attached to one of the plurality of individual sectors.
8. The system of any preceding clause, wherein each sector of the plurality of individual sectors comprises at least one coolant inlet and at least one coolant outlet configured to pass a cooling air flow.
9. The system of any preceding clause, wherein the at least one coolant outlet of each sector of the plurality of individual sectors is disposed in a front plate configured to face a combustion chamber of the turbine combustor, and the at least one coolant outlet is configured to pass the cooling air flow through the front plate into the combustion chamber.
10. The system of any preceding clause, wherein the at least one coolant inlet of each sector of the plurality of individual sectors comprises a first coolant inlet and a second coolant inlet, the first coolant inlet is configured to receive a first cooling air flow from an air flow region between a liner and a flow sleeve of the turbine combustor, and the second coolant inlet is configured to receive a second cooling air flow that is different than the first cooling air flow.
11. The system of any preceding clause, wherein each sector of the plurality of individual sectors comprises a first front plate and a second front plate, each sector of the plurality of individual sectors is configured to receive a cooling air flow and direct the cooling air flow through apertures of the first and second front plates, wherein the first front plate is configured to impinge the cooling air flow on the second front plate.
12. The system of any preceding clause, comprising a turbine engine having the turbine combustor.
13. A system, comprising:
   a first fuel nozzle; and
   a first individual sector having a first outer perimeter configured to fit together with outer perimeters a plurality of individual sectors to form a combustor cap assembly of a turbine combustor, wherein the first individual sector comprises a first inner perimeter that fits about a nozzle outer perimeter of the first fuel nozzle, and the first individual sector is fixedly attached to the first fuel nozzle.
14. The system of any preceding clause, wherein the first outer perimeter comprises a wedge-shaped outer perimeter.
15. The system of any preceding clause, wherein the first outer perimeter comprises at least one hula seal.
16. The system of any preceding clause, wherein the nozzle outer perimeter comprises a circular outer perimeter, and the first inner perimeter comprises a circular inner perimeter.
17. The system of any preceding clause, wherein the first individual sector has a front plate configured to face a combustion chamber of the turbine combustor, and the front plate has a plurality of cooling outlets to pass a cooling air flow into the combustion chamber.
18. The system of any preceding clause, wherein the first fuel nozzle comprises an air conduit having at least one swirl vane, and the first fuel nozzle comprises at least one fuel outlet configured to output a fuel flow into an air flow passing through the air conduit.
19. A system, comprising:
   a first individual sector having a first outer perimeter configured to fit together with outer perimeters of a plurality of individual sectors to form a combustor cap assembly of a turbine combustor, wherein the first individual sector comprises a first inner perimeter configured to fit about a nozzle outer perimeter of a first fuel nozzle, and the first individual sector is configured to fixedly attach to the first fuel nozzle.
20. The system of any preceding clause, comprising the combustor cap assembly including the plurality of individual sectors, wherein each sector of the plurality of individual sectors comprises a wedge-shaped outer perimeter having at least one hula seal.

## Claims

1. A system (10), comprising:
a turbine combustor (14), comprising:
a plurality of fuel nozzles (68); and
a combustor cap assembly (52) comprising a plurality of individual sectors (100) supporting the plurality of fuel nozzles (68), wherein each sector (100) of the plurality of individual sectors (100) is fixedly attached to a respective fuel nozzle (68) of the plurality of fuel nozzles (68).

2. The system (10) of claim 1, wherein each sector (100) of the plurality of individual sectors (100) comprises a wedge-shaped outer perimeter.

3. The system (10) of any preceding claim, wherein each sector (100) of the plurality of individual sectors (100) comprises a circular inner perimeter (223) that extends around a circular outer perimeter (190) of the respective fuel nozzle (68) of the plurality of fuel nozzles (68).

4. The system (10) of any preceding claim, wherein each fuel nozzle (68) of the plurality of fuel nozzles (68) comprises an air conduit (180) having at least one swirl vane (196), and each fuel nozzle (68) comprises at least one fuel outlet (204) configured to output a fuel flow (200) into an air flow (194) passing through the air conduit (180).

5. The system (10) of any preceding claim, wherein each sector (100) of the plurality of individual sectors (100) comprises at least one hula seal (108) disposed between each pair of abutting sectors (100) of the plurality of individual sectors (100), or at least one hula seal (108) disposed between each sector (100) and a liner (62) surrounding the combustor cap assembly (52), or at least one hula seal (108) disposed between each sector (100) and a central fuel nozzle (104).

6. The system (10) of claim 5, wherein the at least one hula seal (108) is configured to maintain a seal while damping vibration and/or allowing movement due to thermal expansion or contraction of the plurality of individual sectors (100).

7. The system (10) of any preceding claim, wherein the plurality of fuel nozzles (68) comprises a plurality of peripheral fuel nozzles (106) disposed about a central fuel nozzle (104), and each peripheral fuel nozzle (106) is fixedly attached to one of the plurality of individual sectors (100).

8. The system (10) of any preceding claim, wherein each sector (100) of the plurality of individual sectors (100) comprises at least one coolant inlet (128) and at least one coolant outlet (132) configured to pass a cooling air flow (84).

9. The system (10) of claim 8, wherein the at least one coolant outlet (132) of each sector (100) of the plurality of individual sectors (100) is disposed in a front plate (112) configured to face a combustion chamber (76) of the turbine combustor (14), and the at least one coolant outlet (132) is configured to pass the cooling air flow (84) through the front plate (112) into the combustion chamber (76).

10. The system (10) of claim 8 or claim 9, wherein the at least one coolant inlet (128) of each sector (100) of the plurality of individual sectors (100) comprises a first coolant inlet (135) and a second coolant inlet (128), the first coolant inlet (135) is configured to receive a first cooling air flow (194, 220) from an air flow region (180) between a liner (62) and a flow sleeve (64) of the turbine combustor (100), and the second coolant inlet (128) is configured to receive a second cooling air flow (209, 216) that is different than the first cooling air flow (194, 220).

11. The system (10) of any preceding claim, wherein each sector (100) of the plurality of individual sectors (100) comprises a first front plate (280) and a second front plate (282), each sector (100) of the plurality of individual sectors (100) is configured to receive a cooling air flow (216) and direct the cooling air flow (216) through apertures (132) of the first and second front plates (280 and 282), wherein the first front plate (280) is configured to impinge the cooling air flow (216) on the second front plate (282).

12. The system (10) of any preceding claim, comprising a turbine engine (10) having the turbine combustor (14).

13. A system (10), comprising:
a first fuel nozzle (68); and
a first individual sector (100) having a first outer perimeter (120) configured to fit together with outer perimeters (120) a plurality of individual sectors (100) to form a combustor cap assembly (52) of a turbine combustor (14), wherein the first individual sector (100) comprises a first inner perimeter that fits about a nozzle outer perimeter of the first fuel nozzle (68), and the first individual sector (100) is fixedly attached to the first fuel nozzle (68) .

14. The system (10) of claim 13, wherein the first outer perimeter (120) comprises a wedge-shaped outer perimeter (120).

15. The system (10) of claim 13 or claim 14, wherein the first outer perimeter (120) comprises at least one hula seal (108).
